# EUROPEAN PATENT APPLICATION

(11) **EP 2 311 698 A1**
(43) Date of publication of application: **20.04.2011**
(21) Application number: 09173231.3
(22) Date of filing: 16.10.2009
(51) Int. Cl.: B60T 8/26, B60T 8/32, B62L 3/08

(54) **Braking system for motorcycle**

(71) Applicant: Yamaha Hatsudoki Kabushiki Kaisha, Iwata-shi, Shizuoka 438-8501 (JP); Continental Automotive Corporation, Yokohama-city Kanagawa 221-0031 (JP); Continental Teves AG & Co. oHG, 60488 Frankfurt am Main (DE)
(72) Inventor: Kusano, Taishi, Asahi-city Chiba 289-2505 (JP); Uchida, Takanori, Yokohama-city Kanagawa 221-0031 (JP); Kremer, Michael, 64846, Groß-Zimmern (DE); Meixner, Michael, 60320, Frankfurt am Main (DE); Seto, Hiroaki, Iwata-shi Shizuoka 438-8501 (JP); Oohashi, Kunihide, Iwata-shi Shizuoka 438-8501 (JP)
(74) Representative: Grünecker, Kinkeldey, Stockmair & Schwanhäusser Anwaltssozietät

(57) **Abstract**

A braking system (30) includes first and second braking force generating mechanisms (35) and (36), first and second operation members (18) and (13), a first association mechanism (22) which supplies hydraulic pressure to the second braking force generating mechanism (36) when the first operation member (18) is operated, and a control unit (28) which controls the first association mechanism (22) to detect an abnormal condition of the braking system (30). When the control unit (28) detects the abnormal condition of the braking system in a state where the first association mechanism (22) is driven, the control unit causes the first association mechanism (22) to gradually reduce hydraulic pressure supplied to the second braking force generating mechanism (36) substantially toward zero.

## Description

### BACKGROUND OF THE INVENTION

### 1. Field of the Invention

The present invention relates to a braking system for motorcycle. More specifically, the invention relates to a braking system for a motorcycle including at least two braking mechanisms and an association mechanism which drives one of the braking mechanisms when the other braking mechanism is operated.

### 2. Description of the Related Art

As a braking system for a motorcycle, there has been conventionally proposed a braking system including two braking mechanisms and an association mechanism which drives one of the braking mechanisms when the other braking mechanism is operated. The following Japanese Patent Application Laid-Open No. 2000-6779 discloses one example of the braking system having the two braking mechanisms and the association mechanism.

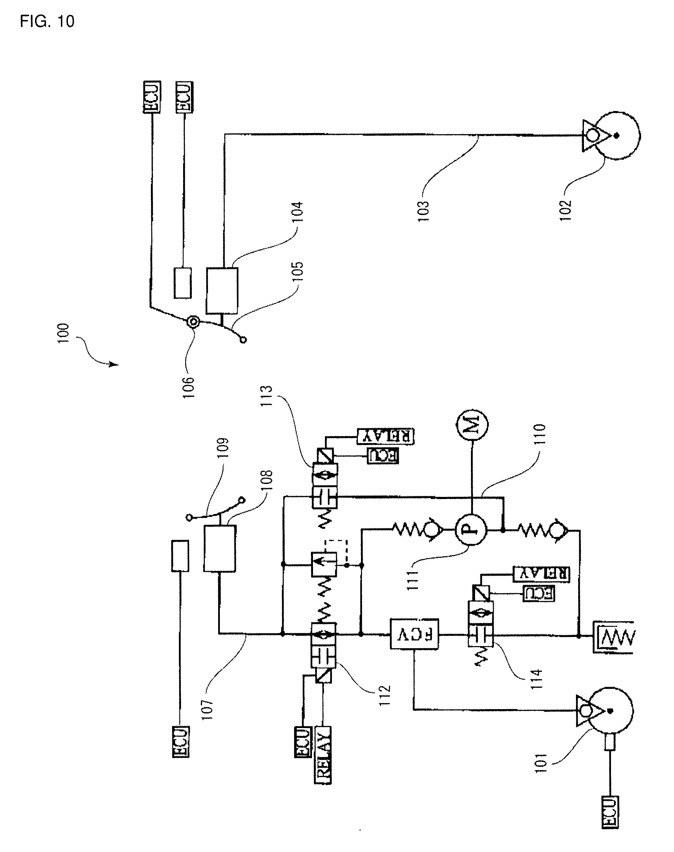

Fig. 10 is an brake fluid circuit diagram of a braking system described in the following Japanese Patent Application Laid-Open No. 2000-6779. As shown in Fig. 10, the braking system 100 includes a first and a second braking force generating mechanisms 101 and 102. The second braking force generating mechanism 102 is connected to a master cylinder 104 through an brake fluid passage 103. A rear brake pedal 105 is attached to the master cylinder 104. If the rear brake pedal 105 is operated, brake fluid in the master cylinder 104 is pushed out. As a result, hydraulic pressure is supplied to the second braking force generating mechanism 102, and a braking force is generated. The rear brake pedal 105 is provided with a stroke sensor 106. The operation of the rear brake pedal 105 is detected by the stroke sensor 106.

The first braking force generating mechanism 101 is connected to a master cylinder 108 through an brake fluid passage 107. A front brake lever 109 is attached to the master cylinder 108.

An brake fluid passage 110 is connected to the brake fluid passage 107. The brake fluid passage 110 is provided with an brake fluid pump 111 constituting an ABS mechanism and an assist mechanism. The ABS mechanism and the assist mechanism include the brake fluid pump 111 and on-off valves 112 to 114.

In a state where the ABS mechanism and the assist mechanism do not function, the on-off valve 112 is opened and the on-off valves 113 and 114 are closed. Therefore, if the front brake lever 109 is operated, brake fluid in the master cylinder 108 is pushed out. As a result, hydraulic pressure is supplied to the first braking force generating mechanism 101, thereby generating a braking force.

In the braking system 100, when the operation of the rear brake pedal 105 is detected and a predetermined condition is satisfied, the assist mechanism is driven. As a result, hydraulic pressure is supplied to the first braking force generating mechanism 101, and a braking force is supplied also to the front wheel. More specifically, the on-off valve 112 and the on-off valve 114 are closed and the on-off valve 113 is opened. Thus, brake fluid in the master cylinder 108 is sucked by the brake fluid pump 111 through the on-off valve 113, and then is supplied to the first braking force generating mechanism 101. As a result, hydraulic pressure is supplied to the first braking force generating mechanism 101 and a braking force is supplied also to the front wheel.

When an abnormal condition is detected in a braking system, it is general to immediately shut down the system. In a braking system 100, however, if an abnormal condition is detected while an assist mechanism is driven and the system is immediately shut down, supply of hydraulic pressure to a first braking force generating mechanism 101 is immediately stopped. As a result, a braking force applied to a front wheel is abruptly reduced. Therefore, a rider may be bothered by a sense of incongruity.

### SUMMARY OF THE INVENTION

The present invention has been accomplished in view of the circumstances, and it is an object of the invention to provide a motorcycle braking system having an association mechanism, which does not give a sense of incongruity to a rider.

A braking system for a motorcycle according to the present invention includes a first braking force generating mechanism, a first hydraulic pressure supply mechanism, a first operation member, a second braking force generating mechanism, a second hydraulic pressure supply mechanism, a second operation member, a first association mechanism and a control unit. The first braking force generating mechanism generates a braking force when hydraulic pressure is supplied. The first hydraulic pressure supply mechanism supplies hydraulic pressure to the first braking force generating mechanism. The first operation member is for operating the first hydraulic pressure supply mechanism. The second braking force generating mechanism generates a braking force when hydraulic pressure is supplied. The second hydraulic pressure supply mechanism supplies hydraulic pressure to the second braking force generating mechanism. The second operation member is for operating the second hydraulic pressure supply mechanism. The first association mechanism supplies hydraulic pressure to the second braking force generating mechanism when the first operation member is operated. The control unit controls the first association mechanism. The control unit detects an abnormal condition of the braking system. When the control unit detects the abnormal condition of the braking system in a state where the first association mechanism is driven, the control unit causes the first association mechanism to gradually reduce hydraulic pressure supplied to the second braking force generating mechanism substantially toward zero.

The braking system for a motorcycle according to the invention may further include a power source which supplies electric power to the control unit, and a relay connected between the power source and the control unit. It is preferable that when the control unit detects the abnormal condition of the braking system in a state where the first association mechanism is driven, the control unit stops supply of electric power to the control unit by turning the relay off after the first association mechanism gradually reduces hydraulic pressure supplied to the second braking force generating mechanism substantially toward zero.

The braking system for a motorcycle of the present invention may further include a second association mechanism which supplies hydraulic pressure to the first braking force generating mechanism when the second operation member is operated. In this case, it is preferable that when the control unit detects the abnormal condition of the braking system in a state where the second association mechanism is driven, the control unit causes the second association mechanism to gradually reduce hydraulic pressure supplied to the first braking force generating mechanism substantially toward zero. With this structure, even when an abnormal condition occurs in the braking system in a state where the second association mechanism is driven, it is possible to prevent a braking force from being abruptly changed.

The second association mechanism may include a second association mechanism on-off valve which is disposed in the first brake fluid passage to open and close the first brake fluid passage, a second association mechanism brake fluid passage whose one end is connected to a portion of the first brake fluid passage closer to the master cylinder and whose other end is connected to a portion of the first brake fluid passage closer to the first braking force generating mechanism than the second association mechanism on-off valve, an brake fluid pump which is disposed in the second association mechanism brake fluid passage to send brake fluid from the first hydraulic pressure supply mechanism toward the first braking force generating mechanism, and a third association mechanism on-off valve which is disposed in the second association mechanism brake fluid passage to open and close the second association mechanism brake fluid passage. In this case, when the control unit detects the abnormal condition of the braking system in a state where the second association mechanism is driven, the control unit may stop the brake fluid pump and gradually increase an opening of the second association mechanism on-off valve so that the second association mechanism gradually reduces hydraulic pressure supplied to the first braking force generating mechanism substantially toward zero.

It is preferable that when the control unit detects the abnormal condition of the braking system in a state where the second association mechanism is driven, the control unit stops supply of electric power to the control unit by turning the relay off after the second association mechanism gradually reduces hydraulic pressure supplied to the first braking force generating mechanism substantially toward zero.

According to the present invention, when the control unit detects the abnormal condition of the braking system in a state where the first association mechanism is driven, the control unit causes the first association mechanism to gradually reduce hydraulic pressure supplied to the second braking force generating mechanism substantially toward zero. Therefore, even when an abnormal condition occurs in the braking system in a state where the first association mechanism is driven, it is possible to prevent a braking force from being abruptly changed. Thus, a rider is less prone to be bothered by a sense of incongruity.

### BRIEF DESCRIPTION OF THE DRAWINGS

Fig. 1 is a left side view of a motorcycle;
Fig. 2 is a schematic plan view of the motorcycle;
Fig. 3 is a schematic structure diagram showing a structure of a braking system;
Fig. 4 is a schematic structure diagram of the braking system when a brake lever is operated;
Fig. 5 is a schematic structure diagram of the braking system when a brake pedal is operated;
Fig. 6 is a schematic structure diagram of the braking system for explaining ABS action of a second braking force generating mechanism when the brake lever is being operated;
Fig. 7 is a schematic structure diagram of the braking system for explaining ABS action of a first and the second braking force generating mechanisms when the brake pedal is being operated;
Fig. 8 is a flowchart showing control when an abnormal condition is detected during front associationed operation;
Fig. 9 is a graph showing variation in opening of a first on-off valve when an abnormal condition is detected during the front associationed operation; and
Fig. 10 is an brake fluid circuit diagram of a braking system described in Japanese Patent Application Laid-Open No. 2000-6779.

### DESCRIPTION OF THE PREFERRED EMBODIMENT

One example of a preferred mode in which the present invention is implemented will be described. However, the invention is not limited to the embodiment below.

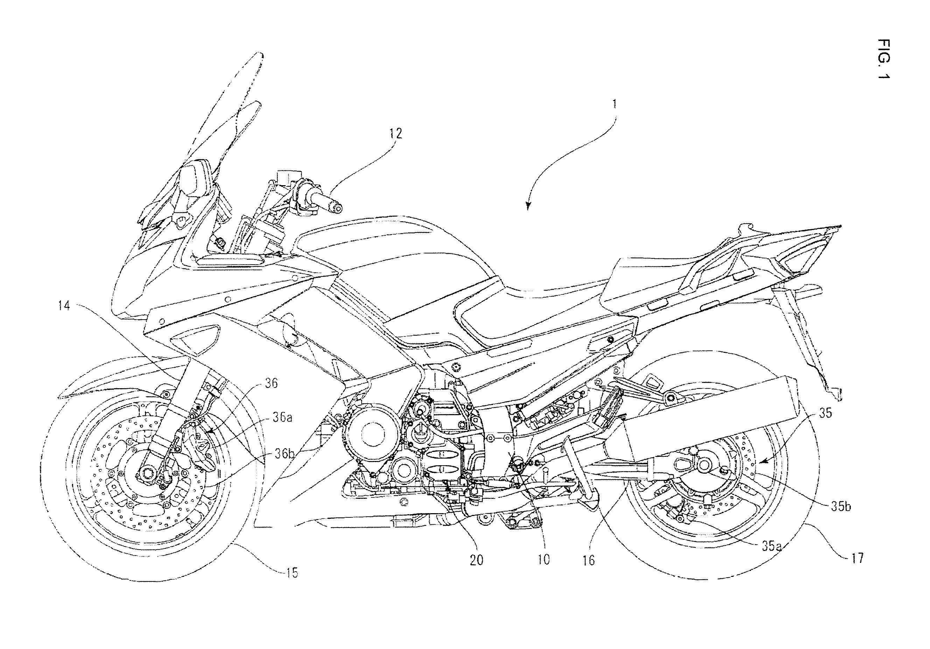

In this embodiment, one example of a preferred mode in which the present invention is implemented will be described based on a motorcycle 1 in a narrow sense shown in Fig. 1.

In the present invention, the motorcycle is not limited to the motorcycle in the narrow sense. The motorcycle refers to any vehicle on which a rider straddles. The motorcycle includes an ATV (All Terrain Vehicle), and a motorcycle in a broad sense. The motorcycle in the broad sense includes a moped, a motocrosser and a scooter in addition to the motorcycle in the narrow sense. The motorcycle in the broad sense includes a vehicle having two or more front wheels and/or two or more rear wheels.

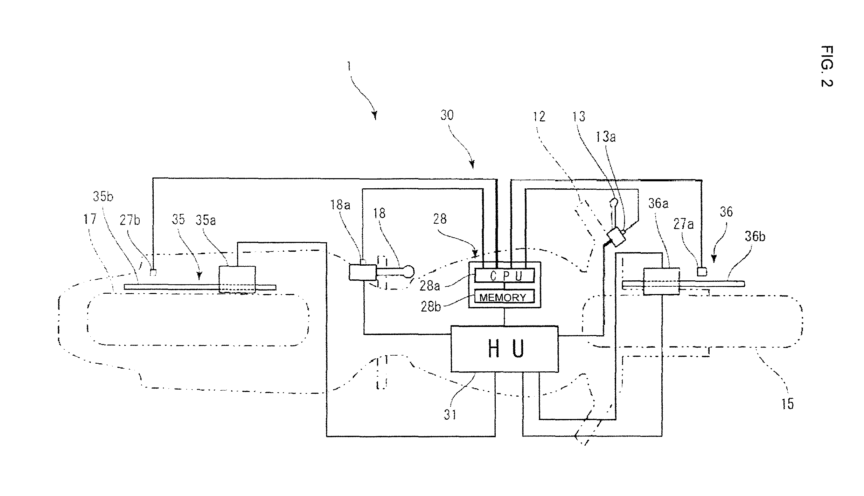

First, a schematic structure of the motorcycle 1 will be described with reference to Figs. 1 and 2. As shown in Fig. 1, the motorcycle 1 includes a body frame 10. A head pipe (not shown) is formed on a front end portion of the body frame 10. A steering shaft (not shown) is rotatably inserted into the head pipe. A pair of left and right front forks 14 are mounted on the steering shaft. A front wheel 15 is rotatably supported at lower end portions of the pair of left and right front forks 14. A steering handle bar 12 is mounted on the head pipe.

A pivot shaft (not shown) is mounted on a rear end portion of the body frame 10. A rear arm 16 is swingably mounted on the pivot shaft. A rear wheel 17 is rotatably supported by a rear end portion of the rear arm 16. The rear wheel 17 is driven by an engine 20 which is suspended by the body frame 10.

As shown in Fig. 2, the motorcycle 1 is provided with a braking system 30. The braking system 30 is for decelerating the motorcycle 1. The braking system 30 of the embodiment includes a front wheel-side braking mechanism which applies a brake to the front wheel 15, a rear wheel-side braking mechanism which applies a brake to the rear wheel 17, a front association mechanism, a rear association mechanism, and an ABS mechanism. The front association mechanism refers to a mechanism which drives the rear wheel-side braking mechanism when the front wheel-side braking mechanism is operated. The rear association mechanism refers to a mechanism which drives the front wheel-side braking mechanism when the rear wheel-side braking mechanism is operated. Most mechanisms of the braking system 30 are accommodated in an HU (Hydraulic Unit) 31.

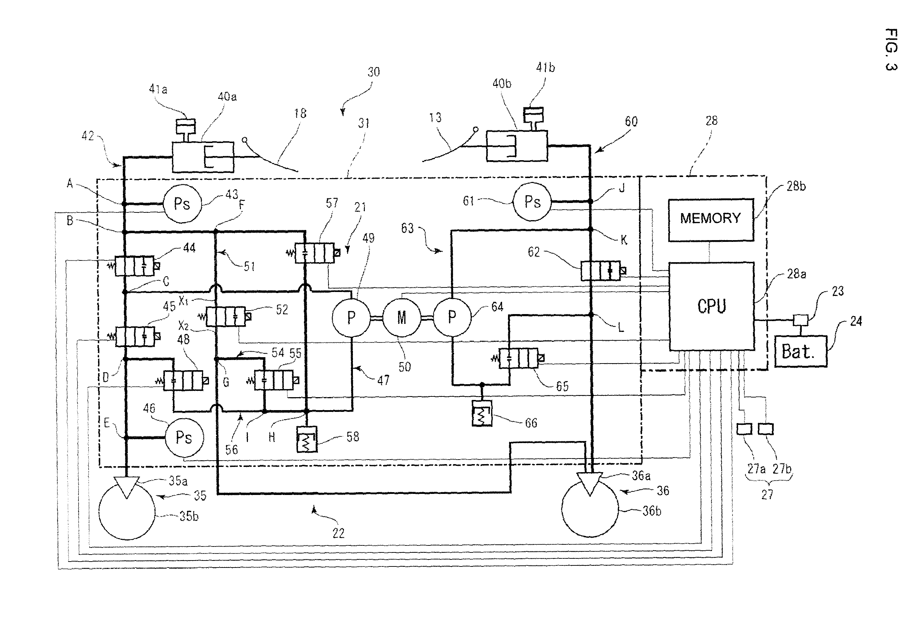

The structure of the braking system 30 will be described in detail with reference to Figs. 2 and 3. As shown in Fig. 3, the braking system 30 includes a first braking force generating mechanism 35 and a second braking force generating mechanism 36.

As shown in Fig. 2, the first braking force generating mechanism 35 is provided to the rear wheel 17. The first braking force generating mechanism 35 is supplied with hydraulic pressure, thereby generating a braking force for the rear wheel 17. More specifically, the first braking force generating mechanism 35 includes a first caliper 35a and a first brake disk 35b. The first brake disk 35b rotates together with the rear wheel 17.

The second braking force generating mechanism 36 is provided to the front wheel 15. The second braking force generating mechanism 36 is supplied with hydraulic pressure, thereby generating a braking force for the front wheel 15. The second braking force generating mechanism 36 includes a second caliper 36a and a second brake disk 36b. More specifically, the second brake disk 36b rotates together with the front wheel 15.

As shown in Fig. 3, the first braking force generating mechanism 35 is connected to a first master cylinder 40a through a first brake fluid passage 42. A reservoir tank 41a and a brake pedal 18 as a first operation member are connected to the first master cylinder 40a. If a rider operates the brake pedal 18, hydraulic pressure is supplied from the first master cylinder 40a to the first braking force generating mechanism 35. As shown in Fig. 2, the brake pedal 18 is provided with a stroke sensor 18a. An operation amount of the brake pedal 18 is detected also by the stroke sensor 18a. The detected operation amount of the brake pedal 18 is output to a CPU 28a.

A second hydraulic pressure sensor 43 as an operation amount detection section and a hydraulic pressure detection section is connected to a point A of the first brake fluid passage 42. The second hydraulic pressure sensor 43 detects hydraulic pressure at the point A of the first brake fluid passage 42. With this, an operation amount of the brake pedal 18 as the first operation member is detected. A sensor which detects the operation amount of the brake pedal 18 may be provided separately from the second hydraulic pressure sensor 43. For example, the brake pedal 18 may be provided with a position sensor or a stroke sensor.

A first on-off valve 44 as the second association mechanism on-off valve and a third on-off valve 45 are disposed in the first brake fluid passage 42. The first on-off valve 44 is disposed between a point B and a point C of the first brake fluid passage 42. The first on-off valve 44 is an open-when-nonenergized type on-off valve which opens when electric power is not supplied, and which closes when electric power is supplied. The third on-off valve 45 is disposed between the point C and a point D of the first brake fluid passage 42. The third on-off valve 45 is also an open-when-nonenergized type on-off valve like the first on-off valve 44.

In this embodiment, the first on-off valve 44, the third brake fluid passage 47 as the second association mechanism brake fluid passage, the first brake fluid pump 49 and the second on-off valve 57 as the third association mechanism on-off valve constitute the front association mechanism 21 as the second association mechanism.

A third hydraulic pressure sensor 46 is connected to a point E of the first brake fluid passage 42. The third hydraulic pressure sensor 46 has a higher hydraulic pressure detection accuracy than the second hydraulic pressure sensor 43. However, the second hydraulic pressure sensor 43 is more excellent in terms of the resistance to pressure than the third hydraulic pressure sensor 46.

Here, the point B of the first brake fluid passage 42 closer to the first master cylinder 40a and the point C closer to the first braking force generating mechanism 35 than a portion of the first brake fluid passage 42 where the first on-off valve 44 is disposed are connected to each other through a third brake fluid passage 47. The third brake fluid passage 47 extends from the point B to the point C through a point F and a point H.

An brake fluid pump 49 is disposed in the third brake fluid passage 47. The brake fluid pump 49 is connected to a motor 50. The brake fluid pump 49 is activated when the motor 50 is driven by a later-described ECU 28. If the brake fluid pump 49 is activated, pressure on the side of the point B becomes low pressure and the pressure on the side of the point C becomes high pressure.

A second on-off valve 57 is disposed in the third brake fluid passage 47. More specifically, the second on-off valve 57 is disposed closer to the point B than the brake fluid pump 49 of the third brake fluid passage 47. The second on-off valve 57 is a closed-when-nonenergized type on-off valve which closes when electric power is not supplied and which opens when electric power is supplied.

Further, a buffer chamber 58 is connected to the point H of the third brake fluid passage 47.

The point F, which is located closer to the point B than the second on-off valve 57, is connected to the second caliper 36a through a fourth brake fluid passage 51 as the first association mechanism brake fluid passage. A fifth on-off valve 52 as the first association mechanism on-off valve is disposed between the point F and a point G of the fourth brake fluid passage 51. The fifth on-off valve 52 is an open-when-nonenergized type on-off valve. In this embodiment, the fifth on-off valve 52 and the fourth brake fluid passage 51 constitute the rear association mechanism 22 as the first association mechanism.

The point D of the first brake fluid passage 42 and the point H of the third brake fluid passage 47 are connected to each other through a fifth brake fluid passage 56. A fourth on-off valve 48 is disposed in the fifth brake fluid passage 56. The fourth on-off valve 48 is a closed-when-nonenergized type on-off valve.

The point G of the fourth brake fluid passage 51 and a point I of the fifth brake fluid passage 56 are connected to each other through a sixth brake fluid passage 54. A sixth on-off valve 55 is disposed in the sixth brake fluid passage 54. The sixth on-off valve 55 is a closed-when-nonenergized type on-off valve.

The second braking force generating mechanism 36 is connected to a second master cylinder 40b through a second brake fluid passage 60. A reservoir tank 41b and a brake lever 13 as a second operation member are connected to the second master cylinder 40b. If a rider operates the brake lever 13, hydraulic pressure is supplied from the second master cylinder 40b to the second braking force generating mechanism 36. As shown in Fig. 2, a stroke sensor 13a is provided to the brake lever 13. The operation amount of the brake lever 13 is detected also by the stroke sensor 13a. The detected operation amount of the brake lever 13 is output to the CPU 28a.

A first hydraulic pressure sensor 61 is connected to a point J of the second brake fluid passage 60. The first hydraulic pressure sensor 61 detects hydraulic pressure at the point J of the second brake fluid passage 60. With this, the operation amount of the brake lever 13 as the second operation member is indirectly detected.

A sensor which directly detects the operation amount of the brake lever 13 may be disposed instead of the first hydraulic pressure sensor 61, or together with the first hydraulic pressure sensor 61. An example of the sensor which directly detects the operation amount of the brake lever 13 includes a position sensor which detects a position of the brake lever 13.

A seventh on-off valve 62 is disposed in a portion closer to the second braking force generating mechanism 36 than the point J of the second brake fluid passage 60. The seventh on-off valve 62 is an open-when-nonenergized type on-off valve.

A point K of the second brake fluid passage 60 closer to the second master cylinder 40b and a point L of the second brake fluid passage 60 closer to the second braking force generating mechanism 36 than the seventh on-off valve 62 are connected to each other through a seventh brake fluid passage 63.

A second brake fluid pump 64 is disposed in the seventh brake fluid passage 63. The second brake fluid pump 64 is driven by the motor 50 mentioned above. If the second brake fluid pump 64 is driven, the pressure on the side of the point L becomes low pressure and the pressure on the side of the point K becomes high pressure.

In this embodiment, in a state where a power source of the motorcycle 1 is ON, the motor 50 is always driven, and the first and the second brake fluid pumps 49 and 64 are always activated.

An eighth on-off valve 65 is disposed between the second brake fluid pump 64 and the point L. The eighth on-off valve 65 is a closed-when-nonenergized type on-off valve. A buffer chamber 66 is connected to a connection point between the eighth on-off valve 65 and the second brake fluid pump 64.

As shown in Fig. 3, the ECU (Electronic Control Unit) 28 as a control unit is disposed adjacent to the HU 31. In this embodiment, the ECU 28 is used only for controlling the HU 31. An ECU (not shown) used for controlling the engine 20 shown in Fig. 1 is provided independently from the ECU 28. However, the present invention is not limited to this configuration. For example, one ECU 28 may control both the engine 20 and the HU 31.

The ECU 28 includes the CPU 28a as a calculating section and a memory 28b as a storing section connected to the CPU 28a. Various settings are stored in the memory 28b as will be described in detail later. Various detection values are also stored in the memory 28b.

The CPU 28a is connected to the on-off valves, the hydraulic pressure sensors and the motor 50 which are included in the HU 31. The on-off valves and the motor 50 included in the HU 31 are controlled by the CPU 28a. Hydraulic pressures detected by the hydraulic pressure sensors 43, 46 and 61 are sent to the CPU 28a.

A front wheel rotation speed sensor 27a and a rear wheel rotation speed sensor 27b are connected to the CPU 28a. A rotation speed of the front wheel 15 is detected by the front wheel rotation speed sensor 27a and is output to the CPU 28a. A rotation speed of the rear wheel 17 is detected by the rear wheel rotation speed sensor 27b and is output to the CPU 28a.

In this embodiment, the CPU 28a calculates a vehicle speed which is a speed of the motorcycle 1 based on output from the front wheel rotation speed sensor 27a and the rear wheel rotation speed sensor 27b. That is, in this embodiment, the front wheel rotation speed sensor 27a and the rear wheel rotation speed sensor 27b constitute a vehicle speed sensor 27 as the vehicle speed detection section.

A method for calculating a vehicle speed from the front wheel rotation speed and the rear wheel rotation speed is not especially limited. For example, an average value of the front wheel rotation speed and the rear wheel rotation speed may be defined as the vehicle speed.

A battery 24 as the power source is connected to the CPU 28a. A relay 23 is connected between the CPU 28a and the battery 24.

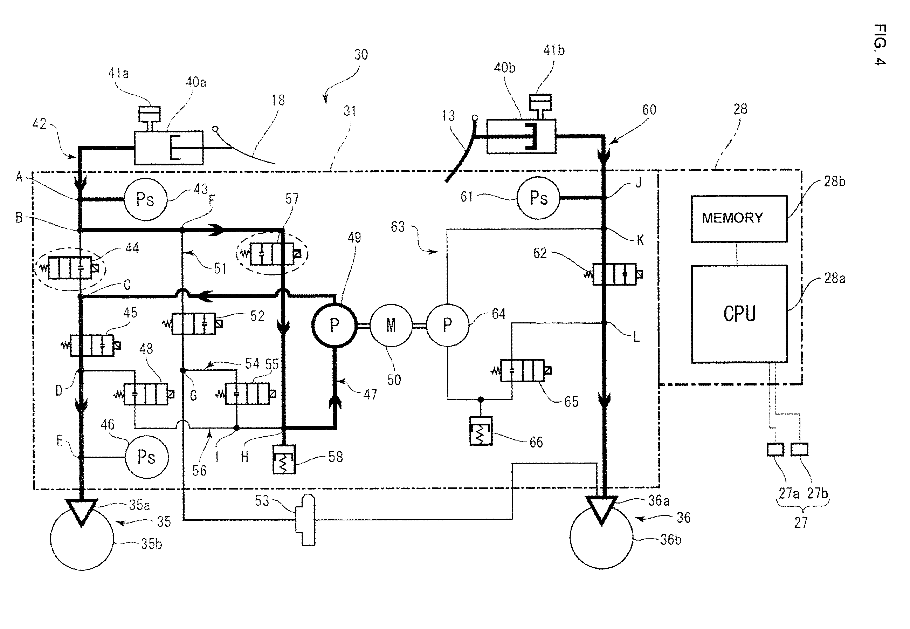

Next, basic control action of the braking system 30 will be described with reference to Figs. 4 to 7. In Figs. 4 to 7, on-off valves which are surrounded by phantom lines are energized on-off valves. On the other hand, on-off valves which are not surrounded by the phantom lines are nonenergized on-off valves.

Fig. 4 is a schematic structure diagram of the braking system when the brake lever 13 is operated. As shown in Fig. 4, if a rider operates the brake lever 13, hydraulic pressure is supplied from the second master cylinder 40b. Here, the seventh on-off valve 62 is the open-when-nonenergized type on-off valve. Therefore, hydraulic pressure from the second master cylinder 40b is supplied to the second caliper 36a through the second brake fluid passage 60. With this, a braking force is generated in the second braking force generating mechanism 36 which is provided to the front wheel 15.

If the brake lever 13 is operated, the increase of hydraulic pressure in the second brake fluid passage 60 is detected by the first hydraulic pressure sensor 61, and this fact is output to the ECU 28. The ECU 28 determines whether or not the brake lever 13 is operated based on hydraulic pressure in the second brake fluid passage 60.

If the ECU 28 determines that the brake lever 13 is operated, the ECU 28 closes the first on-off valve 44 and opens the second on-off valve 57. As a result, brake fluid in the first master cylinder 40a is sucked by the first brake fluid pump 49, and brake fluid is supplied to the first caliper 35a through the third brake fluid passage 47 and the first brake fluid passage 42. With this, a braking force is generated in the first braking force generating mechanism 35 which is provided to the rear wheel 17.

In the braking system 30, if the brake lever 13 is operated, a braking force is generated in the second braking force generating mechanism 36 and a braking force is generated also in the first braking force generating mechanism 35.

This associationed operation is realized through the ECU 28. For this reason, this front associationed operation is called an electrically associationed operation.

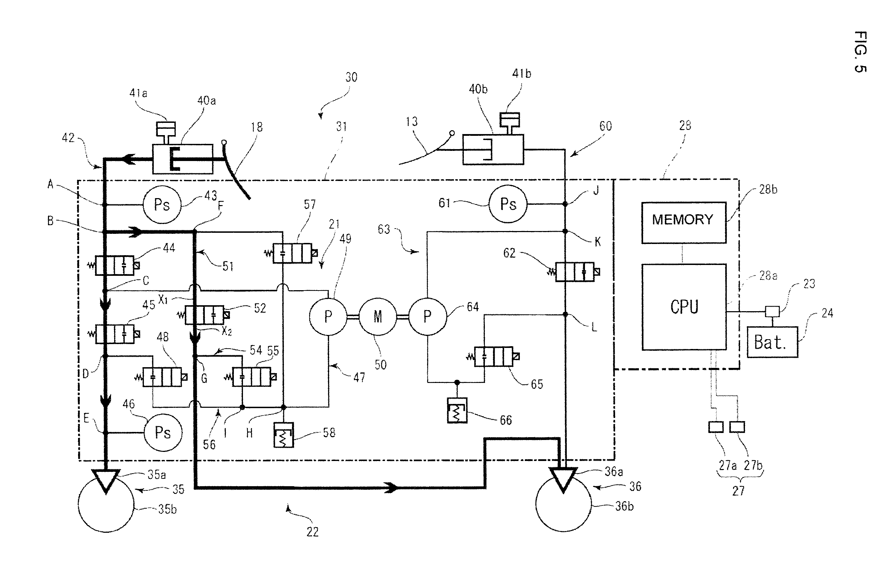

Fig. 5 is a schematic structure diagram of the braking system when the brake pedal 18 is operated. As shown in Fig. 5, if the brake pedal 18 is operated, brake fluid is discharged from the first master cylinder 40a. Here, the first on-off valve 44 and the third on-off valve 45 are open-when-nonenergized type on-off valves. Therefore, brake fluid discharged from the first master cylinder 40a is supplied to the first caliper 35a through the first brake fluid passage 42. With this, a braking force is generated in the first braking force generating mechanism 35 which is provided to the rear wheel 17.

The fifth on-off valve 52 is also the open-when-nonenergized type on-off valve. Therefore, brake fluid discharged from the first master cylinder 40a is supplied also to the second caliper 36a through the fourth brake fluid passage 51. With this, a braking force is generated in the second braking force generating mechanism 36 which is provided to the front wheel 15.

Thus in the braking system 30, if the brake pedal 18 is operated, a braking force is generated not only in the first braking force generating mechanism 35 but also in the second braking force generating mechanism 36.

This associationed operation is different from the associationed operation caused when the brake lever 13 is operated and is mechanically performed without using the ECU 28. Thus, this rear associationed operation is called a mechanically associationed operation.

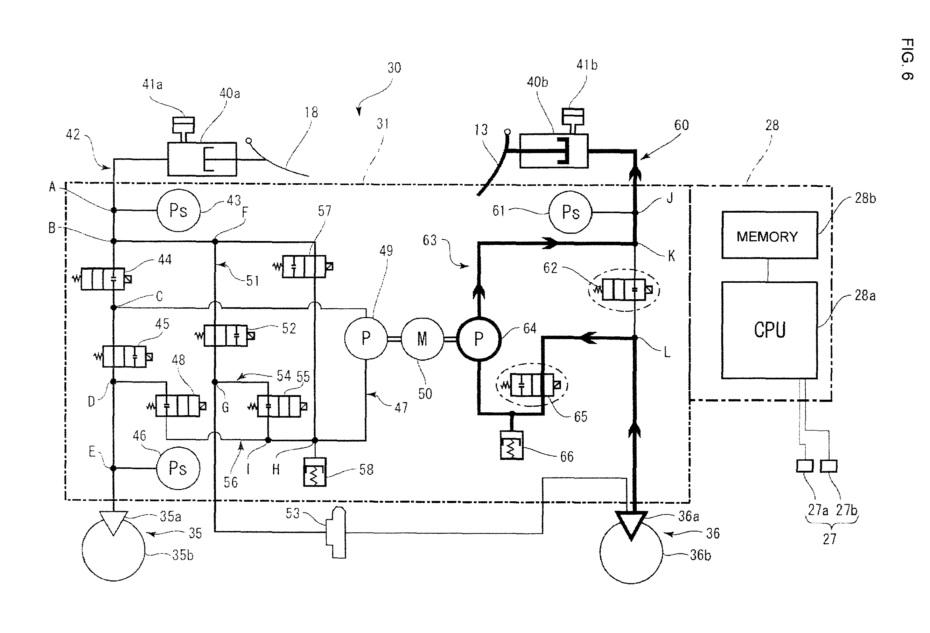

Fig. 6 is a schematic structure diagram of the braking system for describing the ABS action of the second braking force generating mechanism 36 when the brake lever 13 is operated.

The ECU 28 detects a locked state of the front wheel 15 based on output from the front wheel rotation speed sensor 27a and output from the rear wheel rotation speed sensor 27b. More specifically, the ECU 28 detects the locked state of the front wheel 15 when the magnitude of the front wheel rotation speed is largely reduced with respect to the vehicle speed.

If the ECU 28 detects the locked state of the front wheel 15, the ECU 28 supplies current to the seventh and the eighth on-off valves 62 and 65. With this, the seventh on-off valve 62 is closed and the eighth on-off valve 65 is opened. Therefore, brake fluid is sent from the second caliper 36a to the second master cylinder 40b through the seventh brake fluid passage 63. As a result, a braking force generated in the second braking force generating mechanism 36 is reduced.

If the ECU 28 detects that the locked state of the front wheel 15 is released, the ECU 28 stops the current supply to the seventh and the eighth on-off valves 62 and 65. With this, the seventh on-off valve 62 is opened and the eighth on-off valve 65 is closed. As a result, a braking force generated in the second braking force generating mechanism 36 is again increased.

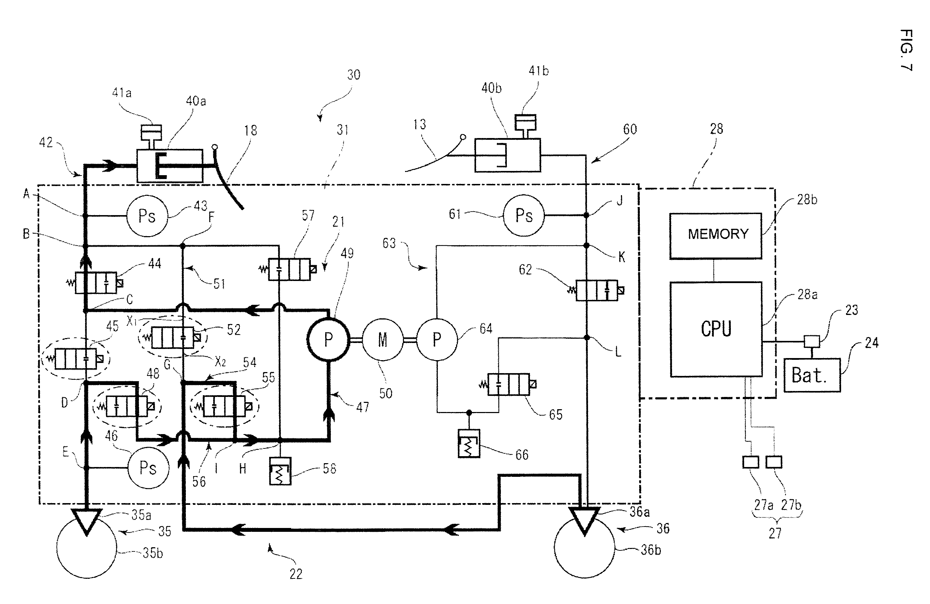

Fig. 7 is a schematic structure diagram of the braking system for describing the ABS action of the first and the second braking force generating mechanisms 35 and 36 when the brake pedal 18 is operated.

The ECU 28 detects the locked state of the rear wheel 17 based on output from the front wheel rotation speed sensor 27a and output from the rear wheel rotation speed sensor 27b. More specifically, the ECU 28 detects the locked state of the rear wheel 17 when the level of the rear wheel rotation speed is largely reduced with respect to the vehicle speed.

If the ECU 28 detects the locked state of the rear wheel 17, the ECU 28 supplies current to the third on-off valve 45 and the fourth on-off valve 48. With this, the third on-off valve 45 is closed and the fourth on-off valve 48 is opened. Therefore, brake fluid in the first caliper 35a is sent to the first master cylinder 40a through the third brake fluid passage 47. As a result, a braking force generated in the first braking force generating mechanism 35 is reduced.

If the ECU 28 detects that the locked state of the rear wheel 17 is released, the ECU 28 stops the current supply to the third and the fourth on-off valves 45 and 48. With this, the third on-off valve 45 is opened and the fourth on-off valve 48 is closed. As a result, a braking force generated in the first braking force generating mechanism 35 is again increased.

These ABS actions are the same also during the front associationed operation in which the brake lever 13 is being operated.

If the ECU 28 detects the locked state of the front wheel 15, the ECU 28 supplies current to the fifth on-off valve 52 and the sixth on-off valve 55 as shown in Fig. 7. With this, the fifth on-off valve 52 is closed and the sixth on-off valve 55 is opened. Thus, brake fluid in the second caliper 36a is sent to the second master cylinder 40b through the sixth brake fluid passage 54. As a result, a braking force generated in the second braking force generating mechanism 36 is reduced.

If the ECU 28 detects that the locked state of the front wheel 15 is released, the ECU 28 stops the current supply to the fifth and the sixth on-off valves 52 and 55. With this, the fifth on-off valve 52 is opened and the sixth on-off valve 55 is closed. As a result, a braking force generated in the second braking force generating mechanism 36 is again increased.

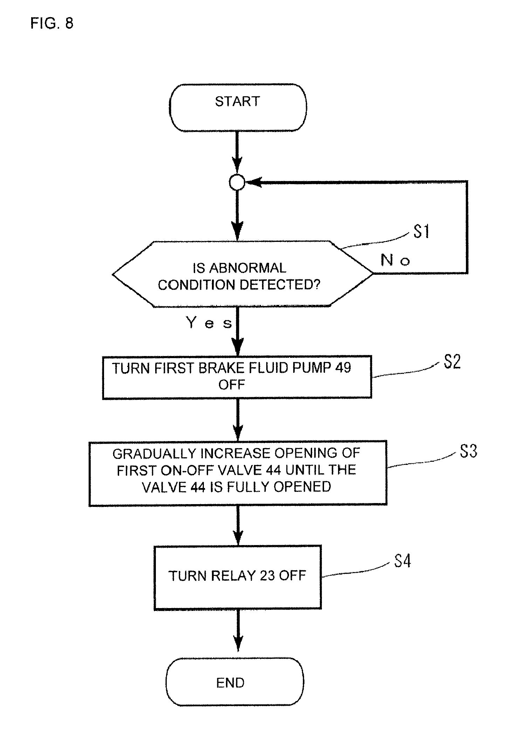

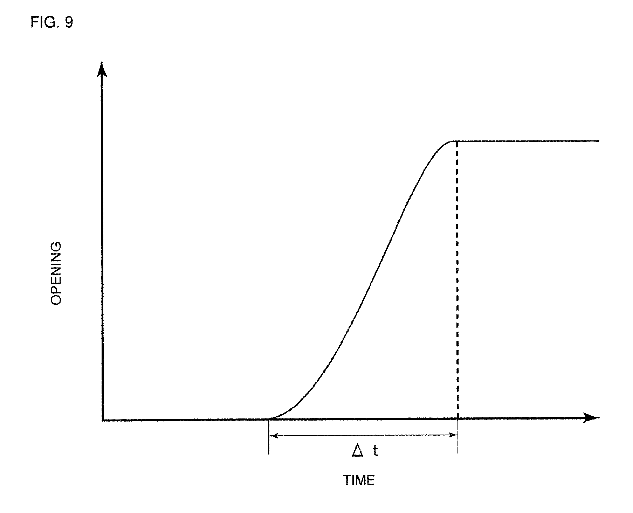

Next, control when an abnormal condition is detected during the front associationed operation will be described mainly with reference to Figs. 8 and 9. As shown in Fig. 8, in step S1, an abnormal condition of the braking system 30 is detected by the ECU 28. The abnormal condition of the braking system 30 includes abnormal conditions of the hydraulic pressure sensors 61, 43 and 46, an abnormal condition of a circuit such as a break in the ECU 28, abnormality in voltage supplied from the battery 24, an abnormal condition of the relay 23, and abnormal conditions of the front wheel rotation speed sensor 27a and the rear wheel rotation speed sensor 27b.

When no abnormal condition of the braking system 30 is detected in step S1, the procedure is returned to step S1. If an abnormal condition of the braking system 30 id detected in step S1, the procedure is advanced to step S2 and step S3.

In step S2, the ECU 28 stops the first brake fluid pump 49. In step S3, as shown in Fig. 9, the ECU 28 gradually increases the opening of the first on-off valve 44 from the current opening to its full opening. Hydraulic pressure supplied by the front association mechanism 21 to the first braking force generating mechanism 35 is gradually reduced toward zero. As a result, a braking force given to the rear wheel 17 by the first braking force generating mechanism 35 is gradually reduced.

Therefore, even when an abnormal condition occurs in the braking system 30 during the front associationed operation, it is possible to prevent a braking force of the braking system 30 from being abruptly reduced. Thus, a rider is less prone to be bothered by a sense of incongruity.

Time (Δt) elapsed until the opening of the first on-off valve 44 is fully opened can appropriately be set in accordance with required characteristics of the motorcycle 1, current vehicle speed of the motorcycle 1, the operation amount of the brake lever 13 and the like. For example, time (Δt) elapsed until the opening of the first on-off valve 44 is fully opened can be 0.1 to 3 seconds, preferably 0.5 to 1.5 seconds, and for example, 1 second.

After the first on-off valve 44 is fully opened in step S3, step S4 is executed. In step S4, the ECU 28 turns the relay 23 off. With this, supply of electric power from the battery 24 to the ECU 28 is stopped.

## Claims

1. A braking system for a motorcycle, including:
a first braking force generating mechanism which generates a braking force when hydraulic pressure is supplied;
a first hydraulic pressure supply mechanism which supplies hydraulic pressure to the first braking force generating mechanism;
a first operation member for operating the first hydraulic pressure supply mechanism;
a second braking force generating mechanism which generates a braking force when hydraulic pressure is supplied;
a second hydraulic pressure supply mechanism which supplies hydraulic pressure to the second braking force generating mechanism;
a second operation member for operating the second hydraulic pressure supply mechanism;
a first association mechanism which supplies hydraulic pressure to the second braking force generating mechanism when the first operation member is operated; and
a control unit which controls the first association mechanism to detect an abnormal condition of the braking system,
the braking system being **characterized in that**
when the control unit detects the abnormal condition of the braking system in a state where the first association mechanism is driven, the control unit causes the first association mechanism to gradually reduce hydraulic pressure supplied to the second braking force generating mechanism substantially toward zero.

2. The braking system for a motorcycle according to claim 1, further including:
a power source which supplies electric power to the control unit; and
a relay connected between the power source and the control unit,
the braking system being **characterized in that**, when the control unit detects the abnormal condition of the braking system in a state where the first association mechanism is driven, the control unit stops supply of electric power to the control unit by turning the relay off after the first association mechanism gradually reduces hydraulic pressure supplied to the second braking force generating mechanism substantially toward zero.

3. The braking system for a motorcycle according to claim 1 or 2, further including a second association mechanism which supplies hydraulic pressure to the first braking force generating mechanism when the second operation member is operated, the braking system being **characterized in that**
when the control unit detects the abnormal condition of the braking system in a state where the second association mechanism is driven, the control unit causes the second association mechanism to gradually reduce hydraulic pressure supplied to the first braking force generating mechanism substantially toward zero.

4. The braking system for a motorcycle according to claim 3, further including:
a master cylinder which is operated by the first operation member and which supplies hydraulic pressure to the first braking force generating mechanism; and
a first brake fluid passage which connects the master cylinder and the first braking force generating mechanism with each other, the braking system being **characterized in that**
the second association mechanism includes:
a second association mechanism on-off valve which is disposed in the first brake fluid passage to open and close the first brake fluid passage;
a second association mechanism brake fluid passage having one end thereof connected to a portion of the first brake fluid passage closer to the master cylinder and the other end thereof connected to a portion of the first brake fluid passage closer to the first braking force generating mechanism than the second association mechanism on-off valve;
an brake fluid pump which is disposed in the second association mechanism brake fluid passage to send brake fluid from the first hydraulic pressure supply mechanism toward the first braking force generating mechanism; and
a third association mechanism on-off valve which is disposed in the second association mechanism brake fluid passage to open and close the second association mechanism brake fluid passage, and
when the control unit detects the abnormal condition of the braking system in a state where the second association mechanism is driven, the control unit stops the brake fluid pump and gradually increases an opening of the second association mechanism on-off valve so that the second association mechanism gradually reduces hydraulic pressure supplied to the first braking force generating mechanism substantially toward zero.

5. The braking system for a motorcycle according to claim 3 or 4, further including:
a power source which supplies electric power to the control unit; and
a relay connected between the power source and the control unit, the braking system being **characterized in that**
when the control unit detects the abnormal condition of the braking system in a state where the second association mechanism is driven, the control unit stops supply of electric power to the control unit by turning the relay off after the second association mechanism gradually reduces hydraulic pressure supplied to the first braking force generating mechanism substantially toward zero.

## Amended claims

### Amended claims in accordance with Rule 137(2) EPC.

**1.** A braking system for a motorcycle, including:
a first braking force generating mechanism (35) which generates a braking force when hydraulic pressure is supplied;
a first hydraulic pressure supply mechanism which supplies hydraulic pressure to the first braking force generating mechanism (35);
a first operation member (18) for operating the first hydraulic pressure supply mechanism;
a second braking force generating mechanism (36) which generates a braking force when hydraulic pressure is supplied;
a second hydraulic pressure supply mechanism which supplies hydraulic pressure to the second braking force generating mechanism (36);
a second operation member (13) for operating the second hydraulic pressure supply mechanism;
a first association mechanism (22) which supplies hydraulic pressure to the second braking force generating mechanism (36) when the first operation member (18) is operated; and
a control unit (28) which controls the first association mechanism (22) to detect an abnormal condition of the braking system,
the braking system being **characterized in that**
when the control unit (28) detects the abnormal condition of the braking system in a state where the first association mechanism (22) is driven, the control unit (28) causes the first association mechanism (22) to gradually reduce hydraulic pressure supplied to the second braking force generating mechanism (36) substantially toward zero.

**2.** A braking system for a motorcycle according to claim 1, **characterized by** a second association mechanism (21) which supplies hydraulic pressure to the first braking force generating mechanism (35) when the second operation member (13) is operated, the braking system being **characterized in that** when the control unit (28) detects the abnormal condition of the braking system in a state where the second association mechanism (21) is driven, the control unit (28) causes the second association mechanism (21) to gradually reduce hydraulic pressure supplied to the first braking force generating mechanism (25) substantially toward zero.

**3.** A braking system for a motorcycle according to claim 2, **characterized by**:
a master cylinder (40a) which is operated by the first operation member (18) and
which supplies hydraulic pressure to the first braking force generating mechanism (35); and
a first brake fluid passage (42) which connects the master cylinder (40a) and the first braking force generating mechanism (35) with each other, the braking system being **characterized in that**
the second association mechanism (21) includes:
a second association mechanism on-off valve (44) which is disposed in the first brake fluid passage (42) to open and close the first brake fluid passage (42);
a second association mechanism brake fluid passage (47) having one end thereof connected to a portion of the first brake fluid passage (42) closer to the master cylinder (40a) and the other end thereof connected to a portion of the first brake fluid passage (42) closer to the first braking force generating mechanism (35) than the second association mechanism on-off valve (44);
a brake fluid pump (29) which is disposed in the second association mechanism brake fluid passage (47) to send brake fluid from the first hydraulic pressure supply mechanism toward the first braking force generating mechanism (35); and
a third association mechanism on-off valve (57) which is disposed in the second association mechanism brake fluid passage (47) to open and close the second association mechanism brake fluid passage (47), and
when the control unit (28) detects the abnormal condition of the braking system in a state where the second association mechanism (21) is driven, the control unit (28) stops the brake fluid pump (29) and gradually increases an opening of the second association mechanism on-off valve (44) so that the second association mechanism (21) gradually reduces hydraulic pressure supplied to the first braking force generating mechanism (35) substantially toward zero.

**4.** A braking system for a motorcycle according to any one of claims 1 to 3, **characterized by**: a power source (24) which supplies electric power to the control unit (28); anda relay (23) connected between the power source (24) and the control unit (28), wherein, when the control unit (28) detects the abnormal condition of the braking system in a state where the first association mechanism (22) is driven, the control unit (28) stops supply of electric power to the control unit (28) by turning the relay 23) off after the first association mechanism (22) gradually reduces hydraulic pressure supplied to the second braking force generating mechanism (36) substantially toward zero.

**5.** A braking system for a motorcycle according to claim 2 or 3, **characterized by**:
a power source (24) which supplies electric power to the control unit (28); and
a relay (23) connected between the power source (24) and the control unit (28), the braking system being **characterized in that**
when the control unit (28) detects the abnormal condition of the braking system in a state where the second association mechanism (21) is driven, the control unit (28) stops supply of electric power to the control unit (28) by turning the relay (23) off after the second association mechanism (21) gradually reduces hydraulic pressure supplied to the first braking force generating mechanism (35) substantially toward zero.
